# EUROPÄISCHE PATENTSCHRIFT

(11) **EP 0 610 685 B1**
(45) Veröffentlichungstag und Bekanntmachung des Hinweises auf die Patenterteilung: **16.10.1996**
(21) Anmeldenummer: 94100622.3
(22) Anmeldetag: 18.01.1994
(51) Int. Cl.: B23K 20/16, B32B 18/00

(54) **Verfahren zum druckdichten Verbinden dünnwandiger Gegenstände aus Metall**
Procedure for making a pressure sealed connection of thin-walled articles made of metal
Procédé pour joindre des articles à paroi mince en métal en tenant la pression

(30) Priorität: 12.02.1993 DE 4304211
(43) Veröffentlichungstag der Anmeldung: 17.08.1994
(73) Patentinhaber: BDAG Balcke-Dürr Aktiengesellschaft, D-40882 Ratingen (DE)
(72) Erfinder: Tillmann, Wolfgang, Dr.-Ing.,, D-52080 Aachen (DE); Broich, Udo, Dipl.-Ing.;, D-52070 Aachen (DE); Feng, Zezhou, M. E.,, D-52070 Aachen (DE); Lugscheider, Erich, Uni.-Prof. Dr. techn.,, D-52074 Aachen (DE)
(74) Vertreter: Stenger, Watzke & Ring Patentanwälte

(56) Entgegenhaltungen:
- EP-A- 0 449 377
- EP-A- 0 466 241
- DE-A- 2 626 180

## Beschreibung

Die Erfindung betrifft ein Verfahren zum druckdichten Verbinden dünnwandiger Gegenstände aus Metall, insbesondere plattenförmiger Bleche, wie Wärmetauscherplatten, die zumindest auf einer Seite als Korrosionsschutz mit einer Emailleschicht versehen sind.

Aus der Praxis ist es seit langem bekannt, metallische Gegenstände aus Gründen des Oberflächenschutzes mit einer Emailleschicht zu versehen, da dieser glasartig erstarrende silikatische Überzug eine porenfreie und harte Oberfläche ausbildet, durch die der beschichtete Grundwerkstoff geschützt wird. Emaillierte Metallteile weisen jedoch den Nachteil auf, daß sie nicht mittels konventioneller Schweißtechniken miteinander verbunden werden können, da die unterschiedlichen chemischen und physikalischen Eigenschaften des Grundwerkstoffes und der Emaillebeschichtung ein Verschweißen emaillierter Metallteile verhindert. Aus diesem Grund werden Metallkonstruktionen häufig erst verschweißt und anschließend emailliert. Dies hat jedoch den Nachteil, daß schwer zugängliche Bereiche der Konstruktion - wenn überhaupt - nur sehr schwierig mit einer Emailleschicht versehen werden können.

Aus der EP-OS 0 449 377 ist ein Verfahren zum Schweißen emaillierter Metallteile bekannt. Bei diesem bekannten Schweißverfahren werden die zu verschweißenden Metallteile an der Schweißstelle mittels einer Schweißquelle, wie beispielsweise einem Laser, erhitzt und miteinander verschweißt. Durch die gezielte Wärmeeinleitung bei der Verwendung eines Lasers soll bei diesem Verfahren die der Schweißstelle gegenüberliegende Emailleschicht nicht aufgeschmolzen werden, während die Grundstoffe der zu verbindenden Metallteile sich durch Aufschmelzen miteinander verbinden. Dieses Verfahren würde zwar das Verschweißen emaillierter Metallteile ermöglichen, jedoch müßte bei beidseitig emaillierten Metallteilen die Schweißstelle nachträglich mit einer neuen Emailleschicht versehen werden. Bei einseitig emaillierten Metallteilen kann die Verschweißung zwar von der nicht emaillierten Seite aus erfolgen, jedoch ist bei komplizierten und großen Bauteilen der Zugang zu dieser Seite nicht immer gewährleistet, so daß eine druckdichte und stoffschlüssige Verbindung der zu verbindenden Bauteile nicht gewährleistet werden kann.

Der Erfindung liegt die **Aufgabe** zugrunde, ein Verfahren zum druckdichten Verbinden dünnwandiger, zumindest auf einer Seite mit einer Emailleschicht versehener Gegenstände aus Metall zu schaffen, bei dem die zu verbindenden Gegenstände ohne Zuhilfenahme eines Zusatzwerkstoffes miteinander verbunden werden können und darüber hinaus die Verbindungsstelle nicht nachträglich mit einer Schutzschicht versehen werden muß.

Die **Lösung** dieser Aufgabenstellung durch die Erfindung ist dadurch gekennzeichnet, daß die miteinander zu verbindenden Gegenstände lagerichtig positioniert und zumindest an den Fügeflächen aneinandergepreßt und derart erwärmt werden, daß die zwischen den Fügeflächen befindliche Emailleschicht in einen teigigen Zustand übergeht und eine stoffschlüssige Verbindung der Gegenstände bewirkt.

Durch diese Verfahrensweise ist es möglich, ohne Fügezusätze und Fügemittel eine druckdichte Verbindung der dünnwandigen Gegenstände miteinander zu bewirken. Um ein Ablösen der Emailleschicht von dem Grundwerkstoff zu verhindern, wird die Emailleschicht nicht bis zum Schmelzpunkt bzw. Schmelzbereich erwärmt, sondern nur in einen teigigen Zustand gebracht, der es ermöglicht, daß sich aneinander anliegende Emailleschichten miteinander verbinden bzw. eine emaillierte Schicht und eine nicht emaillierte Schicht dadurch verbinden, daß die Emaille infolge der Wärme und des aufgebrachten Druckes in die Oberflächenrauhigkeiten des anderen Werkstückes eindringt und sich nach dem Erkalten mit diesem verbindet.

Bei einer bevorzugten Ausführungsform erfolgt die Aufbringung der Wärme und des Druckes unter Normalatmosphäre in einem Ofen. Die Verwendung eines Kammerofens oder eines Durchlaufofens hat den Vorteil, daß komplette Konstruktionen, wie beispielsweise aus vielen Einzelblechen bestehende Wärmetauschermodule, in einem einzigen Ofenzyklus miteinander verbunden werden können. Da die Verbindung der Gegenstände unter Normalatmosphäre stattfinden kann, ist der einzige zu überwachende und zu steuernde Prozeßparameter die Aufheiz- bzw. Abkühlgeschwindigkeit des Ofens.

Bei einer alternativen Ausführungsform des erfindungsgemäßen Verfahrens wird die zur Verbindung benötigte Wärme durch induktive Erwärmung des metallischen Grundwerkstoffes der emaillierten, dünnwandigen Gegenstände erzeugt. Durch diese induktive Erwärmung des Grundwerkstoffes wird die Emailleschicht nur mittelbar, nämlich durch den Grundwerkstoff, erwärmt. Die Verbindung der Gegenstände untereinander erfolgt wiederum durch die in den teigigen Zustand gebrachte Emailleschicht, welche sich aufgrund ihres zähflüssigen Zustandes und des aufgebrachten Druckes mit dem anderen Bauteil verbindet. Bei einer bevorzugten Weiterbildung der Erfindung erfolgt die induktive Erwärmung ausschließlich im Bereich der Fügeflächen, um die Emailleschicht nur in diesem Bereich in den teigigen Zustand zu überführen.

Der aufzubringende Druck ist notwendig, um eine gute Auflage der zu verbindenden Flächen aufeinander zu gewährleisten. Bei schweren Bauteilen kann dieser Druck alleine schon durch das Eigengewicht der zu verbindenden Gegenstände aufgebracht werden.

Weitere Einzelheiten und Vorteile ergeben sich aus der nachfolgenden Beschreibung der zugehörigen Zeichnungen, in denen die Arbeitsweise des erfindungsgemäßen Verfahrens schematisch dargestellt ist. In den Zeichnungen zeigen:
- Fig. 1a: einen Längsschnitt durch zwei zu verbindende, einseitig emaillierte Bleche;
- Fig. 1b: einen Längsschnitt durch die miteinander verbundenen Bleche gemäß Fig. 1a;
- Fig. 2: einen Längsschnitt durch die Verbindungsstelle der Bleche gemäß Kreis II in Fig. 1b anhand eines vergrößerten Schliffbildes;
- Fig. 3a: einen Längsschnitt durch zwei zu verbindende, beidseitig emaillierte Bleche und
- Fig. 3b: einen Längsschnitt durch die miteinander verbundenen Bleche gemäß Fig. 3a.

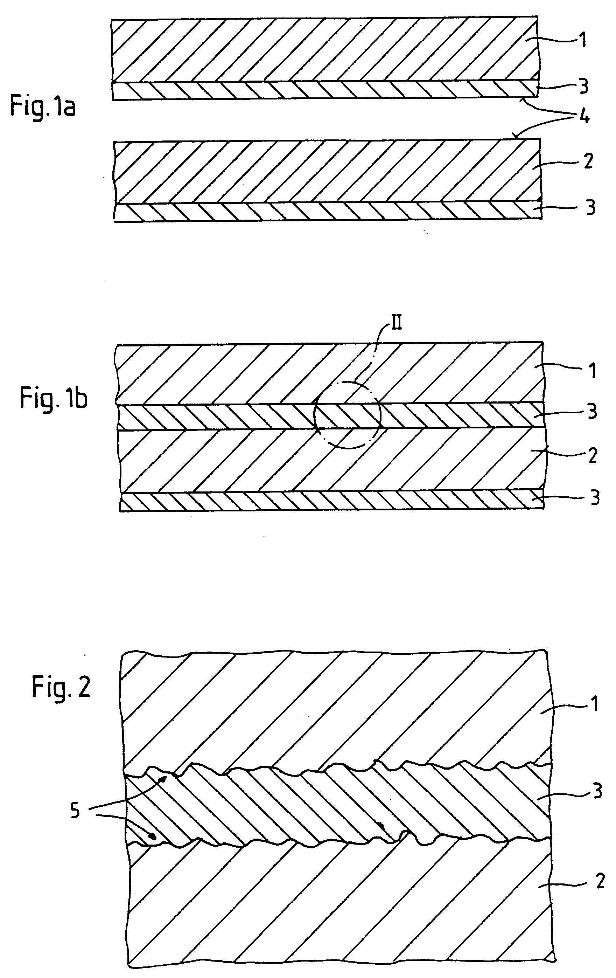

Fig. 1a und 1b zeigen zwei Bleche 1 und 2, welche einseitig mit einer Emailleschicht 3 versehen sind. Diese Emailleschicht 3 kann beispielsweise durch ein Tauchverfahren oder durch Aufspritzen auf die Bleche 1 und 2 aufgebracht werden.

Fig. 1b zeigt die Bleche 1 und 2 im miteinander verbundenen Zustand, bei dem die Fügeflächen 4 zwischen den Blechen 1 und 2 mit einer durchgehenden und homogenen Emailleschicht 3 versehen sind. Fig. 2 zeigt anhand eines vergrößerten Schliffbildes gemäß dem strichpunktierten Kreis II in Fig. 1b die Wirkungsweise des erfindungsgemäßen Verfahrens. Die erwärmte und zähflüssige Emailleschicht 3 dringt in Oberflächenrauhigkeiten 5 des Bleches 2 ein und verbindet die Bleche 1 und 2 somit nach dem Erstarren der Emailleschicht 3.

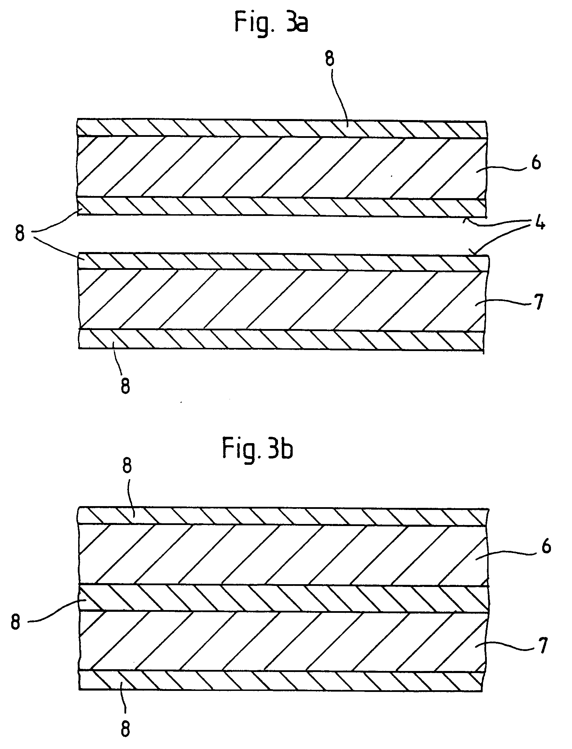

Fig. 3a und 3b ist die Verbindung zweier Bleche 6 und 7 zu entnehmen, die beidseitig mit einer Emailleschicht 8 versehen sind. Hierbei kommt die in Fig. 3b dargestellte Verbindung der Bleche 6 und 7 dadurch zustande, daß sich die einander zugewandten Emailleschichten 8 im erwärmten Zustand vereinigen und im erkalteten Zustand eine stoffschlüssige und gasdichte Verbindung der Bleche 6 und 7 bewirken.

Das erfindungsgemäße Verfahren zum druckdichten Verbinden dünnwandiger, zumindest auf einer Seite mit einer Emailleschicht 3, 8 versehenen Gegenstände arbeitet folgendermaßen:

Die aus Blechen 1 und 2 mit einer einseitigen Emailleschicht 3 bzw. Blechen 6 und 7 mit beidseitiger Emailleschicht 8 bestehenden Gegenstände werden lagerichtig aufeinander positioniert und zumindest an den Fügeflächen 4 aneinandergepreßt. Anschließend wird die Emailleschicht 3 bzw. 8 soweit erwärmt, bis diese in einen teigigen Zustand übergeht. Die Erwärmung kann beispielsweise in einem Ofen erfolgen, in dem die gesamte Konstruktion erwärmt wird, oder aber mittels induktiver Erwärmung erfolgen, wobei die Emailleschicht 3 bzw. 8 nur mittelbar durch die Erwärmung des Grundwerkstoffes, d. h. des Bleches 1, 2 bzw. 6, 7 erwärmt wird. Infolge der teigig gewordenen und somit zähflüssigen Emailleschicht 3 bzw. 8 und aufgrund des Anpreßdruckes verbinden sich die aneinander anliegenden Emailleschichten 3 bzw. 8 sowie die Emailleschicht 3 und die nicht emaillierte Fläche. Nach dem Erkalten sind die Bleche 1 und 2 bzw. 6 und 7 durch eine homogene Emailleschicht 3 bzw. 8 druckdicht und stoffschlüssig miteinander verbunden. Die Verbindung der Bleche 1 und 2 bzw. 6 und 7 erfolgt dabei ohne Zuhilfenahme eines Fügezusatzes oder Fügemittels, da die als Korrosionsschutz auf den Blechen 1, 2 bzw. 6, 7 aufgebrachte Emailleschicht 3 bzw. 8 die Verbindung der Bauteile bewerkstelligt.

### Bezugszeichenliste:

- 1: Blech
- 2: Blech
- 3: Emailleschicht
- 4: Fügefläche
- 5: Oberflächenrauhigkeit
- 6: Blech
- 7: Blech
- 8: Emailleschicht

## Patentansprüche

1. Verfahren zum druckdichten Verbinden dünnwandiger Gegenstände aus Metall, insbesondere plattenförmiger Bleche, wie Wärmetauscherplatten, die zumindest auf einer Seite als Korrosionsschutz mit einer Emailleschicht versehen sind,
**dadurch gekennzeichnet,**
daß die miteinander zu verbindenden Gegenstände lagerichtig positioniert und zumindest an den Fügeflächen (4) aneinander gepreßt und derart erwärmt werden, daß die zwischen den Fügeflächen (4) befindliche Emailleschicht (3, 8) in einen teigigen Zustand übergeht und eine stoffschlüssige Verbindung der Gegenstände bewirkt.

2. Verfahren nach Anspruch 1, dadurch gekennzeichnet, daß die Aufbringung von Wärme und Druck unter Normalatmosphäre in einem Ofen erfolgt.

3. Verfahren nach Anspruch 1, dadurch gekennzeichnet, daß die Wärme durch induktive Erwärmung des metallischen Grundwerkstoffes erzeugt wird.

4. Verfahren nach Anspruch 3, dadurch gekennzeichnet, daß die induktive Erwärmung ausschließlich im Bereich der Fügeflächen (4) erfolgt.

## Claims

1. Process for the pressure-tight connection of thin-walled objects made of metal, in particular plate-shaped metal sheets, such as heat-exchanger plates, which are provided at least on one side with a layer of enamel as an anti-corrosion measure, characterized in that the objects which are to be connected to one another are placed in the correct position and are pressed against each other at least at the joint surfaces (4) and heated such that the layer of enamel (3, 8) situated between the joint surfaces (4) changes into a pasty state and brings about a material-to-material connection of the objects.

2. Method according to Claim 1, characterized in that the application of heat and pressure takes place in a furnace under standard atmosphere.

3. Method according to Claim 1, characterized in that the heat is generated by inductive heating of the metallic base material.

4. Method according to Claim 3, characterized in that the inductive heating takes place exclusively in the region of the joint surfaces (4).

## Revendications

1. Procédé pour créer une liaison étanche à la pression entre des objets métalliques à paroi mince, en particulier des tôles en forme de plaques, comme des plaques d'échangeur de chaleur, qui sont pourvus au moins sur une face d'une couche anticorrosive émaillée, caractérisé en ce que les objets à assembler sont placés dans la position correcte, comprimés l'un contre l'autre au moins au niveau de leurs surfaces d'assemblage (4) et chauffés, de façon que la couche émaillée (3, 8) située entre les surfaces d'assemblage (4) devienne pâteuse et crée entre les objets une liaison par conjugaison de matières.

2. Procédé selon la revendication 1, caractérisé en ce que la mise en oeuvre de la chaleur et de la pression s'effectuent en atmosphère normale dans un four.

3. Procédé selon la revendication 1, caractérisé en ce que la chaleur est produite en chauffant par induction le matériau métallique de base.

4. Procédé selon la revendication 3, caractérisé en ce que le chauffage par induction s'effectue uniquement dans la zone des surfaces d'assemblage (4).
